# EUROPEAN PATENT APPLICATION

(11) **EP 4 129 115 A1**
(43) Date of publication of application: **08.02.2023**
(21) Application number: 21189056.1
(22) Date of filing: 02.08.2021
(51) Int. Cl.: A47B 88/423, A47B 55/02, F16B 12/38, F24C 15/16

(54) **FIXING MEANS**

(71) Applicant: Segos Co., Ltd., Incheon 21696 (KR)
(72) Inventor: LEE, Doo Myun, Incheon 21341 (KR); PARK, Sang Eun, Incheon 21557 (KR)
(74) Representative: Beck & Rössig European Patent Attorneys

(57) **Abstract**

The present invention relates to a fixing means for fastening a fixed rail (141) of a slide rail (140) comprising: the fixed rail coupled to a wire rack (110), which is coupled to a main body of a drawer assembly and comprises a plurality of vertical frames (120) and a plurality of horizontal frames (130); and a movable rail (142) which is slidably disposed on the fixed rail (141) and to which the drawer assembly fastens, wherein the fixing means (100) can provide: a first fixing clip (160) provided on one side of the fixed rail (141) and fastened to one side of the wire rack (110); and a second fixing clip (160) provided on the other side of the fixed rail (141) and fastened to the other side of the wire rack (110).

## Description

### Technical Field

The present invention relates to a fixing means, and more specifically, to a fixing means which simply and easily fixes a slide rail to a wide rack using a fixing clip.

### Background Art

Generally, in installation structures of electronic products such as refrigerators and dishwashers, cooking appliances such as ovens, furniture which receives and stores various things, or the like, drawer assemblies which are sliding-coupled to be opened and closed so as to receive or withdraw objects are installed.

Such a drawer assembly may be withdrawn to the outside of the installation structure in order to receive an object and may be inserted into the installation structure after receiving the object in a sliding manner. A slide rail is installed in the drawer assembly so that the drawer assembly acts smoothly when being withdrawn from and inserted into the installation structure. A rolling means having a ball or roller type is installed in the slide rail so that the drawer assembly may move smoothly while rolling when withdrawal or insertion of the drawer assembly is performed. Since the slide rail is installed between the installation structure and the drawer assembly, when withdrawal or insertion of the drawer assembly is performed, the drawer assembly may smoothly slide so that ease of use can be improved.

However, such a slide rail is fixed to the installation structure by a fixing means, in the case of the conventional fixing means, since a fixing force of the fixing means decreases due to continuous movement of the slide rail, deformation and separation problems occur. In addition, in order to maintain a high coupling force, a structure of the fixing means should be complex, or when the slide rail and the installation structure are coupled, a high force should be applied to couple the slide rail and the installation structure due to a high elastic force.

Accordingly, the need for an easy clip which allows a user to easily separate the rail from and couple the rail to the wire rack of the installation structure so as to improve convenience of the slide rail is increasing.

In addition, such an easy clip needs to be formed so that a structure is simple, is easily assembled, and is easily installed on the wire rack using a relatively small force.

### Technical Problem

The present invention is directed to providing a fixing means of which a coupling structure for installing a slide rail on a wire rack by rotating a fixing clip coupled to the slide rail is simplified and which is easily installed using even a small force according to a leverage principle.

### Technical Solution

One aspect of the present invention provides a fixing means for coupling a fixed rail of a slide rail that includes the fixed rail, which is coupled to a wire rack coupled to a main body of a drawer assembly and formed of a plurality of vertical frames and a plurality of horizontal frames, and a movable rail disposed on the fixed rail to be slidably moved and to which a drawer is coupled, the fixing means including a first fixing clip provided at one side of the fixed rail and coupled to one side of the wire rack and a second fixing clip provided at the other side of the fixed rail and coupled to the other side of the wire rack.

Each of the first fixing clip and the second fixing clip may include a plate part which is in contact with and coupled to a side surface of the fixed rail, an upper end bent part which is bent inward from an upper end portion of the plate part to cover and be coupled to the horizontal frame disposed above the upper end bent part, a lower end bent part which is bent inward from a lower end portion of the plate part to cover and be coupled to the horizontal frame disposed under the lower end bent part, and a guide part formed to be bent outward from the lower end bent part to guide the horizontal frame disposed under the guide part to be inserted into the lower end bent part.

The first fixing clip may include a first side surface bent part formed to be bent at one side of the plate part to be supported by a bent coupling part formed at one side of the horizontal frame, and the second fixing clip may include a second side surface bent part formed to be bent at the other side of the plate part to be supported by a bent coupling part formed at the other side of the horizontal frame.

The first fixing clip may include a first side surface extension part formed to extend from the other side of the plate part to increase an area in contact with a side surface of the fixed rail so as to increase a support force, and the second fixing clip may include a second side surface extension part formed to extend from one side of the plate part to increase an area in contact with the side surface of the fixed rail to increase a support force.

The first fixing clip may be coupled to a first clip support part disposed in a direction perpendicular to one side of the horizontal frame, and the second fixing clip may be coupled to a second clip support part disposed in a vertical direction perpendicular to the other side of the horizontal frame.

The first fixing clip may include a first coupling plate part which is in contact with and coupled to a side surface of the fixed rail, a first bent part which is bent from an end of the first coupling plate part toward the first clip support part, a second bent part which extends from the first bent part and is bent to cover the first clip support part, and a third bent part formed to be bent outward from the second bent part to guide the first clip support part to be inserted into the second bent part.

The second fixing clip may include a second coupling plate part which is in contact with and coupled to the side surface of the fixed rail, a fixing bent part which is bent from an upper end portion of the second coupling plate part and is parallel to the second coupling plate part to cover the horizontal frame disposed above the fixing bent part, a fixing protrusion formed to protrude from the fixing bent part toward the second coupling plate part to fix the horizontal frame, and a separation prevention groove formed in the fixing bent part into which the second clip support part is inserted.

More details about this will be described below with reference to the drawings and the like.

### [Advantageous Effects]

According to an above-described fixing means according to the present invention, a structure in which a slide rail is fixed to a wire rack by rotating a fixing clip coupled to the slide rail so as to simplify an assembly structure and allow installation to be easily performed using even a small force can be achieved.

### Description of Drawings

FIG. 1 is a perspective view illustrating a vertical frame, a horizontal frame, a slide rail, and a fixing means according to an embodiment of the present invention.
FIG. 2 is a partially enlarged view illustrating a first fixing clip coupled to the horizontal frame and the slide rail according to the embodiment of the present invention.
FIG. 3 is a perspective view illustrating the first fixing clip according to the embodiment of the present invention.
FIG. 4 is a partially enlarged view illustrating a second fixing clip coupled to the horizontal frame and the slide rail according to the embodiment of the present invention.
FIG. 5 is a partially enlarged view illustrating a first fixing clip fixed to a horizontal frame and a slide rail according to another embodiment of the present invention.
FIG. 6 is a partially enlarged view illustrating a second fixing clip coupled to the horizontal frame and the slide rail according to another embodiment of the present invention.
FIG. 7 is a perspective view illustrating the first fixing clip according to another embodiment of the present invention.
FIG. 8 is a perspective view illustrating the second fixing clip according to another embodiment of the present invention.

### Modes of the Invention

Hereinafter, exemplary embodiments of the present invention will be described in detail with reference to the accompanying drawings.

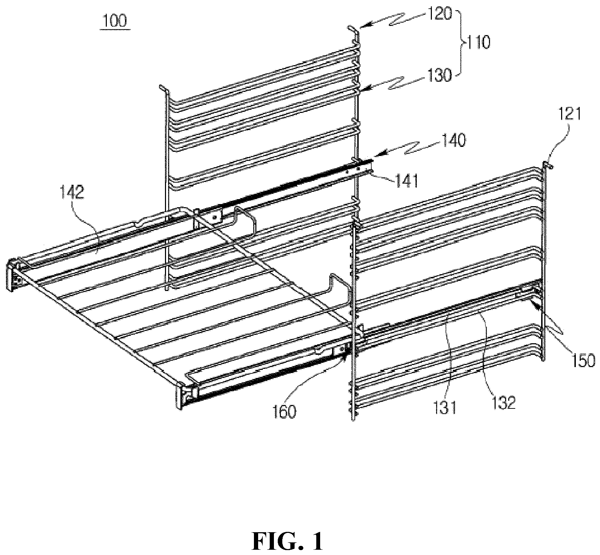

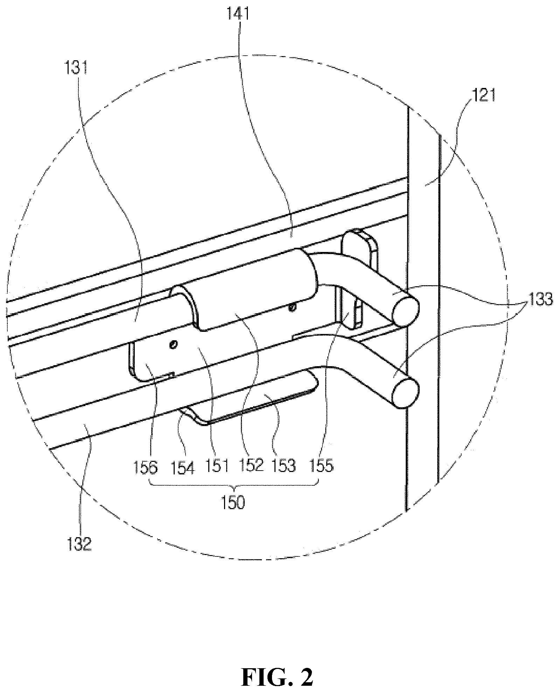

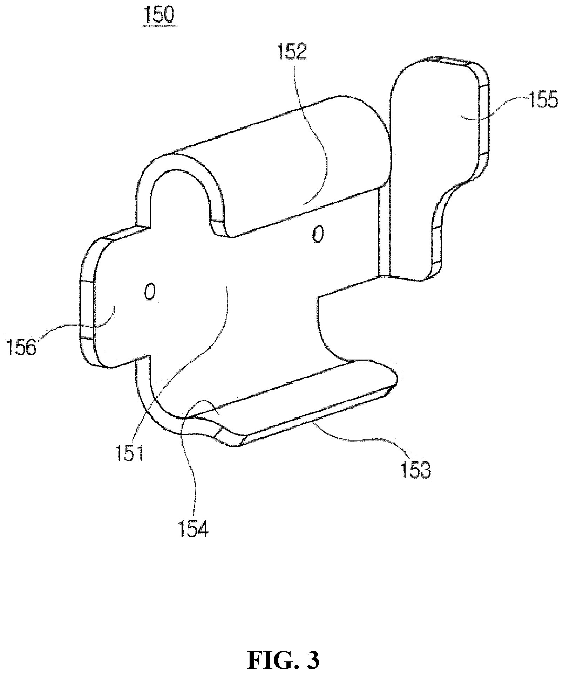

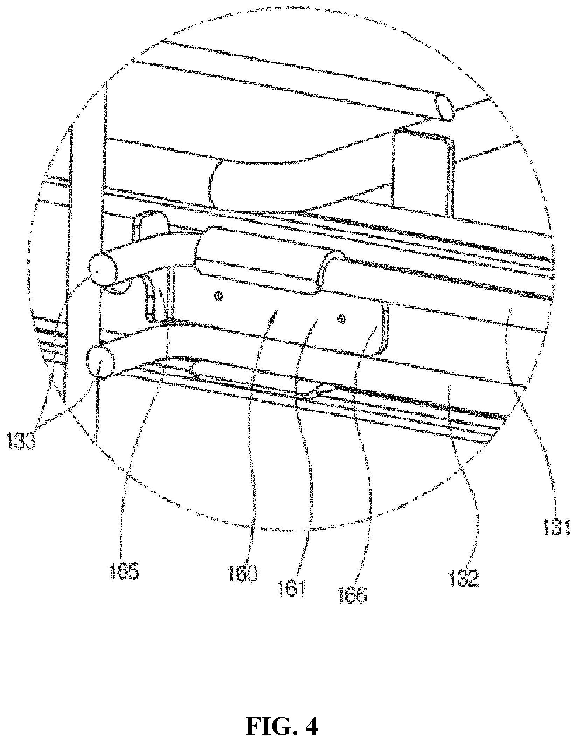

Referring to FIGS. 1 to 4, a fixing means 100 according to an embodiment of the present invention includes a wire rack 110 provided to be supported by the ground surface, slide rails 140 which are coupled to the wire rack 110 and disposed to allow sliding movement, and first fixing clips 150 and second fixing clips 160 which are provided to fix the slide rails 140 to the wire rack 110.

The fixing means 100 according to the present invention includes the wire rack 110 to be supported by the ground surface.

More specifically, the wire rack 110 includes vertical frames 120 having frames 121 which are supported by the ground surface and are vertically disposed and horizontal frames 130 having first support parts 131 and second support parts 132 which are horizontally disposed between and connected to the vertical frames 120. Accordingly, a weight applied from the horizontal frame 130 is supported by the vertical frame 120 in a direction perpendicular to the ground surface. Although the horizontal frame 130 is divided into the first support part 131 and the second support part 132 for the sake of convenience in the description, when the first support part 131 and the second support part 132 are considered as one group, the horizontal frames 130 may have a structure formed of a plurality of groups.

In addition, bent coupling parts 133 each having a "c" shape bent inward are provided at both ends of the horizontal frame 130, and the vertical frame 120 is coupled to an end of each of the bent coupling parts 133. That is, the vertical frame 120 is coupled to the end of the bent coupling part 133 and vertically coupled to the horizontal frame 130.

Meanwhile, the slide rail 140 which allows sliding movement is coupled to the wire rack 110.

More specifically, the slide rail 140 includes a fixed rail 141 fixed to the horizontal frame 130 and a movable rail 142 which is coupled to one side of the fixed rail 141 and is slidably movable from the fixed rail 141. Accordingly, the slide rail 140 has a structure in which the movable rail 142 moves to one side or slidably moves to the other side to receive or withdraw an object according to user's needs.

Meanwhile, the fixed rail 141 is coupled to the wire rack 110 by the first fixing clip 150 and the second fixing clip 160.

More specifically, the first fixing clip 150 and the second fixing clip 160 are coupled to a side surface of the fixed rail 141, the first and second fixing clips 150 and 160 are coupled to the wire rack 110, and thus the fixed rail 141 and the wire rack 110 are coupled. That is, the fixed rail 141 is fixed to the wire rack 110 by the first and second fixing clips 150 and 160, and the movable rail 142 is coupled to the fixed rail 141 to be slidably moved.

As one embodiment, the first fixing clip 150 may include a plate part 151, an upper end bent part 152, a lower end bent part 153, and a guide part 154.

More specifically, the first fixing clip 150 includes the plate part 151 having an iron plate shape which is in contact with the side surface of the fixed rail 141 and is coupled to one side of the fixed rail 141 by a rivet, bolt, or the like. The upper end bent part 152 which is bent toward an upper surface of the first support part 131 to cover and be coupled to the first support part 131 disposed thereabove is provided on an upper end portion of the plate part 151. Accordingly, the upper end bent part 152 has a structure in which a lower surface thereof covers and is supported by an upper side of the first support part 131. In addition, the lower end bent part 153 bent toward a lower surface of the second support part 132 to fit to the second support part 132 disposed thereunder is provided on a lower end portion of the plate part 151. Such a structure allows the upper end bent part 152 to be supported by the first support part 131 and allows the first fixing clip 150 to be rotated about the first support part 131 to fit to a lower side of the second support part 132 along an upper surface of the lower end bent part 153. Accordingly, the lower end bent part 153 is easily fitted according to a leverage principle about the first support part 131. In this case, the guide part 154 bent upward to be parallel to the second support part 132 is formed on the lower end bent part 153. Accordingly, since the guide part 154 serves as a catch jaw, the second support part 132 fitted to the lower end bent part 153 is prevented from being uncovered toward one side. In addition, the guide part 154 may be provided to easily fit the first fixing clip 150 to the first support part 131 and the second support part 132. That is, when the upper end bent part 152 of the first fixing clip 150 is coupled to the first support part 131 and the lower end bent part 153 is compressed to be coupled to the second support part, since the guide part 154 having a concave shaped structure is provided on the lower end bent part 153, the compression can be easily performed.

In addition, in the plate part 151, a first side surface bent part 155 and a first side surface extension part 156 are formed.

More specifically, the plate part 151 includes the first side surface bent part 155 which covers the bent coupling part 133 provided at one side of the horizontal frame 130 to support the fixed rail 141 against a laterally applied force and is provided by bending an end of one side of the plate part 151. That is, the bent coupling parts 133 bent inward are provided at two ends of the horizontal frame 130 to be coupled to the vertical frame 120, and one side of the plate part 151 is bent to form the first side surface bent part 155 to cover outer sides of the bent coupling parts 133 positioned at one side of the horizontal frame 130.

Accordingly, since the first side surface bent part 155 stably withstands against a force applied in a lateral direction of the first fixing clip 150, the fixed rail 141 coupled to the first fixing clip 150 can be prevented from being separated in the lateral direction.

In addition, an end of the other side of the plate part 151 extends to form the first side surface extension part 156 to increase an area in contact with the side surface of the fixed rail 141 so as to increase a support force.

In addition, when the first fixing clip 150 is coupled to one side of the horizontal frame 130, the second fixing clip 160 is coupled to the other side of the horizontal frame 130. The second fixing clip 160 includes a second side surface bent part 165 which covers the bent coupling part 133 formed at the other side of the horizontal frame 130 and is provided by bending an end of the other side of a plate part 161. That is, the bent coupling parts 133 bent inward to be coupled to the vertical frame 120 are provided at two ends of the horizontal frame 130, and the other side of the plate part 161 is bent to form the second side surface bent part 165 to cover outer sides of the bent coupling parts 133 positioned at the other side of the horizontal frame 130. Accordingly, since the second side surface bent part 165 stably withstands against a force applied in a direction of a side surface of the second fixing clip 160, the fixed rail 141 coupled to the second fixing clip 160 can be prevented from being separated in the direction of the side surface. In addition, since structures of the upper end bent part 152, the lower end bent part 153, and the guide part 154 of the first fixing clip 150 are the same as those of the second fixing clip 160, detailed descriptions thereof will be omitted.

In addition, the end of the other side of the plate part 161 extends to form a second side surface extension part 166 to increase an area in contact with the side surface of the fixed rail 141 so as to increase a support force. Accordingly, the second fixing clip 160 can be stably supported against a force applied in the direction of the side surface.

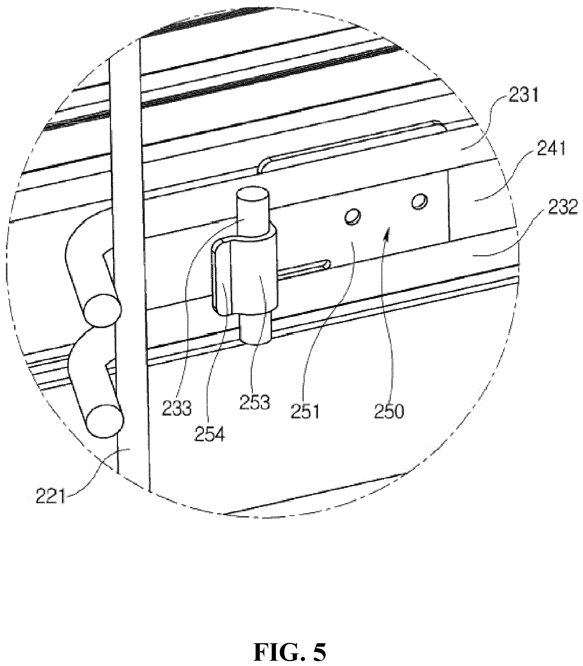

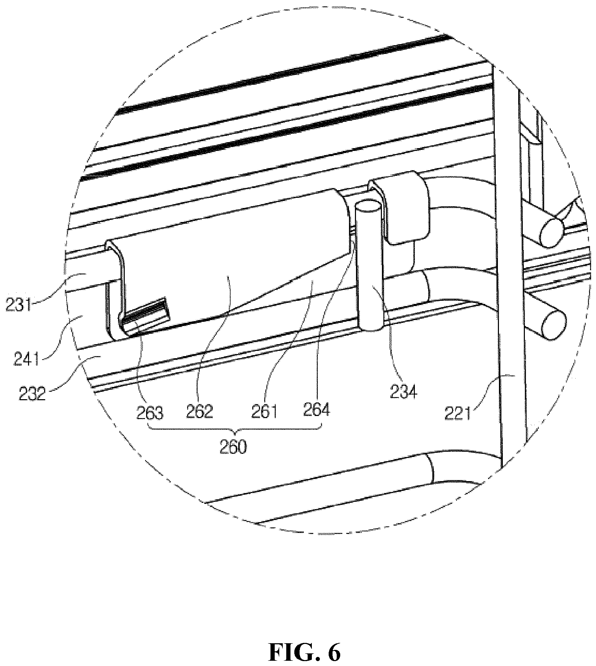

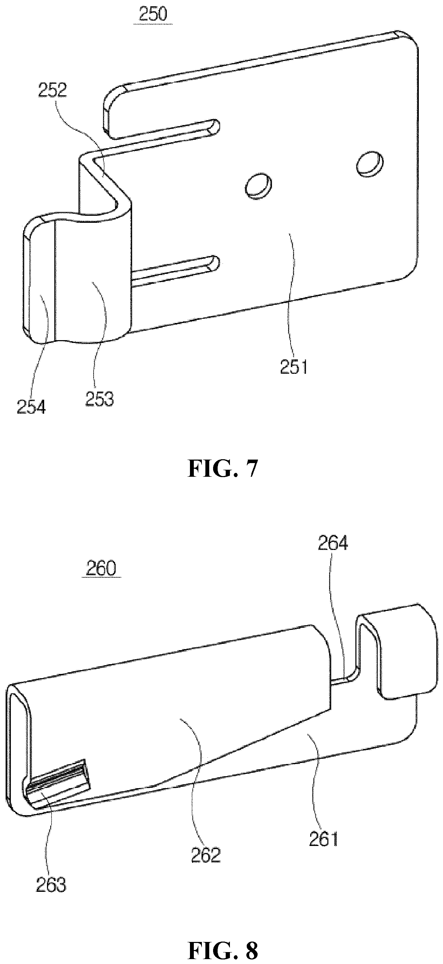

As another embodiment, referring to FIGS. 5 to 8, a first support part 231 and a second support part 232, which are provided to be the same as those of the horizontal frame 130 of FIG. 1, are provided, and the first support part 231, the second support part 232, and a fixed rail 241 may be coupled to a first fixing clip 250 and a second fixing clip 260.

More specifically, the first support part 231 and the second support part 232 are disposed on a horizontal frame 130, a first clip support part 233 and a second clip support part 234, which are perpendicularly connected to one side and the other side, are coupled to the horizontal frame 130 between the first support part 231 and the second support part 232, a first fixing clip 250 supported by the first clip support part 233 disposed at one side and a second fixing clip 260 supported by the second clip support part 234 disposed at the other side are coupled to the horizontal frame 130. The first fixing clip 250 includes a first coupling plate part 251 which is in contact with and coupled to a side surface of the fixed rail 241, a first bent part 252 bent toward the first clip support part 233 from an end of one side of the first coupling plate part 251, and a second bent part 253 which extends from the first bent part 252, covers the first clip support part 233, and is bent to the other side to be stably supported by the first clip support part 233. The second bent part 253 extends from the first bent part 252 and is bent to cover the first clip support part 233, and a third bent part 254 is formed to be bent outward from the second bent part 253 so as to guide the first clip support part 233 to be inserted into the second bent part 253. When the first fixing clip 250 is coupled to the first clip support part 233, the third bent part 254 may be bent back to guide the first clip support part 233 to be easily inserted into the first fixing clip 250. Accordingly, the first fixing clip 250 supported by the first clip support part 233 can be stably supported against a force applied from a side surface of the second bent part 253.

In this case, the fixed rail 241 is rotated about the first fixing clip 250 coupled to the fixed rail 241, and the second fixing clip 260 coupled to the other side of the fixed rail 241 is coupled to the second clip support part 234 perpendicularly connected to the other side of each of the first support part 231 and the second support part 232.

Meanwhile, the second fixing clip 260 includes a second coupling plate part 261 which is in contact with and coupled to the side surface of the fixed rail 241, an upper end portion of the second coupling plate part 261 covers the first support part 231 disposed thereabove to fix the second fixing clip 260, and a fixing bent part 262 is bent to be spaced a predetermined distance from and parallel to the second coupling plate part 261. Accordingly, the fixing bent part 262 is bent to be spaced the predetermined distance from the second coupling plate part 261 and covers and is supported by an upper end of the first support part 231.

In addition, a fixing protrusion 263 is formed at one side of the fixing bent part 262 to protrude toward the second coupling plate part 261 so as to fix the first support part 231. Accordingly, the fixed rail 241 moves downward from above with respect to the second fixing clip 260, and the first support part 231 is inserted between the second coupling plate part 261 and the fixing bent part 262 and moved along the fixing protrusion 263 to be fitted between the second coupling plate part 261 and the fixing bent part 262. Thus, the first support part 231 is inserted and fixed between the second coupling plate part 261 and the fixing bent part 262 due to the fixing protrusion 263.

In this case, a separation prevention groove 264 passing through a side surface of the second coupling plate part 261 and a side surface of the fixing bent part 262 is provided, and since the second clip support part 234 inserted into the separation prevention groove 264 from above is fitted to the separation prevention groove 264, separation of the fixed rail 241 and the second fixing clip 260 due to a force applied in a lateral direction is prevented.

Thus, due to the fixing bent part 262 and the fixing protrusion 263, the fixed rail 241 and the second fixing clip 260 can be stably coupled without separation even when forces are applied from above and below, and due to the structure of the second clip support part 234, the second bent part 253, and the separation prevention groove 264, the fixed rail 241 and the second fixing clip 260 can be stably coupled without separation even when the force is applied in the lateral direction. In addition, since the coupling is performed by rotation about the first fixing clip 250, assembly is simple, and installation is easily performed using a small force. In addition, the first fixing clip and the second fixing clip have different structures according to supporting directions, the structures can supplement the support directions, and a simple coupling method can be used.

While the present invention has been described with reference to the drawings according to the embodiments of the present invention, various applications and modifications may be made within the scope of the present invention by those skilled in the art on the basis of the above-described contents.

### Reference Numerals

- 100:: FIXING MEANS
- 110:: WIRE RACK
- 120:: VERTICAL FRAME
- 121, 221:: VERTICALLY DISPOSED FRAME
- 130:: HORIZONTAL FRAME
- 131, 231:: FIRST SUPPORT PART
- 132, 232:: SECOND SUPPORT PART
- 133:: BENT COUPLING PART
- 140:: SLIDE RAIL
- 141, 241:: FIXED RAIL
- 142:: MOVABLE RAIL
- 150, 250:: FIRST FIXING CLIP
- 151:: PLATE PART
- 152:: UPPER END BENT PART
- 153:: LOWER END BENT PART
- 154:: GUIDE PART
- 155:: FIRST SIDE SURFACE BENT PART
- 156:: FIRST SIDE SURFACE EXTENSION PART
- 160, 260:: SECOND FIXING CLIP
- 165:: SECOND SIDE SURFACE BENT PART
- 166:: SECOND SIDE SURFACE EXTENSION PART
- 233:: FIRST CLIP SUPPORT PART
- 234:: SECOND CLIP SUPPORT PART
- 251:: FIRST COUPLING PLATE PART
- 252:: FIRST BENT PART
- 253:: SECOND BENT PART
- 254:: THIRD BENT PART
- 261:: SECOND COUPLING PLATE PART
- 262:: FIXING BENT PART
- 263:: FIXING PROTRUSION
- 264:: SEPARATION PREVENTION GROOVE

## Claims

1. A fixing means (100) for coupling a fixed rail (141, 241) of a slide rail (140) that includes the fixed rail, which is coupled to a wire rack (110) coupled to a main body of a drawer assembly and formed of a plurality of vertical frames (120) and a plurality of horizontal frames (130), and a movable rail (142) which is disposed on the fixed rail (141, 241) to be slidably moved and to which a drawer is coupled, the fixing means (100) comprising:
a first fixing clip (150) provided at one side of the fixed rail (141, 241) and coupled to one side of the wire rack (110); and
a second fixing clip (160) provided at the other side of the fixed (141, 241) rail and coupled to the other side of the wire rack (110).

2. The fixing means (100) of claim 1, wherein each of the first fixing clip (150) and the second fixing clip (160) includes:
a plate part (151) which is in contact with and coupled to a side surface of the fixed rail (141, 241);
an upper end bent part (152) which is bent inward from an upper end portion of the plate part (151) to cover and be coupled to the horizontal frame (130) disposed above the upper end bent part (152);
a lower end bent part (153) which is bent inward from a lower end portion of the plate part (151) to cover and be coupled to the horizontal frame (130) disposed under the lower end bent part (153); and
a guide part (154) formed to be bent outward from the lower end bent part (153) to guide the horizontal frame (130) disposed under the guide part (154) to be inserted into the lower end bent part (153).

3. The fixing means (100) of claim 1 or 2, wherein:
the first fixing clip (150) includes a first side surface bent part (155) formed to be bent at one side of the plate part (151) to be supported by a bent coupling part (133) formed at one side of the horizontal frame (130); and
the second fixing clip (160) includes a second side surface bent part (165) formed to be bent at the other side of the plate part (151) to be supported by a bent coupling part (133) formed at the other side of the horizontal frame (130).

4. The fixing means (100) of claim 2 or 3, wherein:
the first fixing clip (150) includes a first side surface extension part (156) formed to extend from the other side of the plate part (151) to increase an area in contact with the side surface of the fixed rail (141, 241) so as to increase a support force; and
the second fixing clip (160) includes a second side surface extension part (166) formed to extend from one side of the plate part (151) to increase an area in contact with the side surface of the fixed rail (141, 241) to increase a support force.

5. The fixing means of one of claims 1 to 4, wherein:
the first fixing clip (150) is coupled to a first clip support part (233) disposed in a direction perpendicular to one side of the horizontal frame (130); and
the second fixing clip (160) is coupled to a second clip support part (234) disposed in a direction perpendicular to the other side of the horizontal frame (130).

6. The fixing means of claim 5, wherein the first fixing clip (160) includes:
a first coupling plate part (251) which is in contact with and coupled to a side surface of the fixed rail (141, 241);
a first bent part which (252) is bent from an end of the first coupling plate part (251) toward the first clip support part (233);
a second bent part (253) which extends from the first bent part (252) and is bent to cover the first clip support part (233); and
a third bent part (254) formed to be bent outward from the second bent part (253) to guide the first clip support part (233) to be inserted into the second bent part (253).

7. The fixing means (100) of claim 5 or 6, wherein the second fixing clip (160) includes:
a second coupling plate part (261) which is in contact with and coupled to the side surface of the fixed rail (141, 241);
a fixing bent part (262) which is bent from an upper end portion of the second coupling plate part (261) and is parallel to the second coupling plate part (261) to cover the horizontal frame (130) disposed above the fixing bent part (262);
a fixing protrusion (263) formed to protrude from the fixing bent part (262) toward the second coupling plate part (261) to fix the horizontal frame (130); and
a separation prevention groove (264) formed in the fixing bent part (262) into which the second clip support part (234) is inserted.
